# EUROPÄISCHE PATENTSCHRIFT

(11) **EP 0 705 055 B1**
(45) Veröffentlichungstag und Bekanntmachung des Hinweises auf die Patenterteilung: **01.12.1999**
(21) Anmeldenummer: 95114508.5
(22) Anmeldetag: 15.09.1995
(51) Int. Cl.: H05B 3/14

(54) **Elektrische Heizeinrichtung, insbesondere für ein Kraftfahrzeug**
Electrical heating, especially for vehicles
Chauffage électrique, en particulier pour des voitures

(30) Priorität: 28.09.1994 DE 4434613
(43) Veröffentlichungstag der Anmeldung: 03.04.1996
(73) Patentinhaber: Behr GmbH & Co., D-70469 Stuttgart (DE)
(72) Erfinder: Damsohn, Herbert, Dr., D-73773 Aichwald (DE); Krumbach, Karl-Gerd, D-71576 Burgstetten (DE); Löhle, Michael, Dr., D-73732 Esslingen (DE); Zwittig, Eberhard, D-73269 Hochdorf (DE)
(74) Vertreter: Riedel, Peter, Dipl.-Ing.

(56) Entgegenhaltungen:
- EP-A- 0 616 486
- DE-A- 3 042 420
- US-A- 5 256 857
- US-A- 5 326 418

## Beschreibung

Die Erfindung bezieht sich auf eine elektrische Heizeinrichtung, insbesondere für ein Kraftfahrzeug der im Oberbegriff des Anspruchs 1 angegebenen Gattung.

Die Beheizung des Fahrzeuginnenraums bei Kraftfahrzeugen erfolgt üblicherweise mittels des Kühlwassers des Antriebsaggregates, so daß die in der Brennkraftmaschine entstehende Wärme bedarfsweise an die in den Fahrzeuginnenraum strömende Luft abgegeben wird. Diese Wärme steht jedoch erst nach einer bestimmten Betriebsdauer zur Verfügung, so daß insbesondere in der kalten Jahreszeit das Wirksamwerden der Heizung als unzureichend empfunden wird. Auch durch die Entwicklung neuer Motoren, in denen weniger Wärmeenergie anfällt und über das Kühlwasser abgeführt wird, steht zur Fahrzeugheizung eine geringere Wärmeenergie zur Verfügung, die bei extrem niedrigen Außentemperaturen keineswegs zur Fahrzeugheizung ausreicht und die auch bei normalem Heizungsbedarf erst mit erheblicher zeitlicher Verzögerung zu behaglichen Innenraumtemperaturen führt.

Aus den vorstehenden Gründen wurden bereits Zusatzheizungen vorgeschlagen, die in den Luftführungskanal eingesetzt werden und die Wärme an die in den Fahrzeuginnenraum strömende Luft abgeben. Die Anordnung einer Zusatzheizung zwischen einem Heizungswärmetauscher einer Fahrzeugheizungsanlage und der Fahrzeugkabine ist beispielsweise in dem Aufsatz von Burk, Kraus, Löhle "Integrales Klimasystem für Elektroautomobile" ATZ Autombiltechnische Zeitschrift, Heft 11, 1992 beschrieben.

Aus der EP-A 0 243 077 ist eine elektrische Zusatzheizung für ein Kraftfahrzeug bekannt, bei der PTC-Elemente mit Wellrippen in wärmeleitender Verbindung stehen und die von den PTC-Elementen erzeugte Wärme über die Wellrippen an die einen Luftführungskanal durchströmende Luft abgegeben wird. Die Gesamtanordnung, bestehend aus zwei die PTC-Elemente zwischen sich einschließenden Blechen und jeweils auf der anderen Seite des Bleches angeordneten Wellrippen, ist mittels eines dünnen Isolationsmaterials umwickelt, welches gleichzeitig den Luftführungskanal bildet. Bei einer solchen Anordnung kann aufgrund des verfügbaren Querschnitts lediglich eine geringe Heizleistung übertragen werden, so daß die Anforderungen bezüglich der Sicherheit (Defrostung der Windschutzscheibe) und des Komforts nicht erfüllt werden.

Es ist außerdem aus der EP-B-0 350 528 ein Radiator bekannt, der mehrere parallel angeordnete Heizelemente umfaßt, die zu einem Block zusammengesetzt und in einem Rahmen befestigt sind. Zwischen jeweils zwei Blechen sind PTC-Elemente gehalten und auf der jeweils anderen Seite der Bleche befindet sich eine mit diesen in wärmeleitender Verbindung stehende Wellrippe.

Bei dieser Anordnung ist jedes Heizelement mit einem elektrischen Anschluß versehen, der durch ein Rahmenteil zur Außenseite des Radiators geführt ist. Für Radiatoren größerer Heizleistung, die demzufolge eine größere Anzahl von Heizelementen benötigen, vervielfacht sich auch die Zahl der erforderlichen elektrischen Anschlüsse mit den dafür erforderlichen Isolierungen im Bereich der Durchführungen. Da die Wellrippe mit den jeweils angrenzenden Blechen stoffschlüssig verbunden ist, können die Heizelemente nicht vorgefertigt werden, da diese selbst erst bei der Herstellung des gesamten Radiators durch Einlegen der PTC-Elemente zwischen die mit Wellrippen versehenen Bleche entstehen. Eine Prüfung des Heizelementes selbst ist also erst am fertigen Radiator möglich, das heißt bei einem Fehler in einem Heizelement muß der gesamte Radiator ausgesondert werden.

Der Erfindung liegt die Aufgabe zugrunde, eine elektrische Heizeinrichtung der im Oberbegriff des Anspruchs 1 genannten Gattung derart weiterzubilden, daß eine einfachere und kostengünstigere Herstellung möglich ist.

Diese Aufgabe wird durch eine elektrische Heizeinrichtung der im Anspruch 1 angegebenen Merkmale gelöst.

Ein wesentlicher Vorteil der Erfindung besteht darin, daß das Heizelement als standardisiertes, vorgefertigtes Bauteil herstellbar und auf seine Funktionsfähigkeit überprüfbar ist und daß dieses Bauteil in beliebiger Anzahl je nach benötigter Heizleistung zusammensetzbar ist, wobei die abgewinkelten Abschnitte auf der jeweiligen Seite der Heizeinrichtung einen gemeinsamen elektrischen Anschluß bilden.

Gemäß einer vorteilhaften Weiterbildung der Erfindung beträgt die Länge der abgewinkelten Abschnitte mindestens das Zweifache eines Abstandes zwischen den Heizelementen. Auf diese Weise ist eine genügend große Anlagefläche und ein guter Stromübergang gegeben. Besonders vorteilhaft ist eine Ausgestaltung, bei der die Enden der abgewinkelten Abschnitte einer Seite jedes Heizelementes gebündelt durch eine seitliche Öffnung des Rahmens ragen. Dadurch ergibt sich in Abhängigkeit der Anzahl zusammengefügter Heizelemente des Blockes ein entsprechender Querschnitt des elektrischen Anschlusses, so daß immer eine gleiche Strombelastung für die einzelnen stromführenden Bleche gegeben ist und Temperaturspitzen dadurch vermieden werden. Diese gebündelten Enden der abgewinkelten Abschnitte sind zweckmäßigerweise als Steck- oder Schraubkontakt für eine elektrische Anschlußleitung ausgebildet. Damit die Wellrippen auch ohne stoffschlüssige Verbindung in ihrer Lage zwischen den jeweiligen Blechen gesichert sind, weisen die Bleche entlang ihrer als Anlage für die Wellrippen dienenden Fläche mehrere Vorsprünge auf.

Um die Gefahr von Kurzschlüssen der elektrisch leitenden Bleche und Wellrippen zu vermeiden und auch eine gute elektrische und thermische Isolierung gegen die Außenseite zu bieten, ist es vorteilhaft, daß der Rahmen aus einem Kunststoff besteht und die äußere Umfangsfläche des Blockes umschließt, wobei der Rahmen an den Stirnseiten, die die Enden der Heizelemente aufnehmen, einen U-förmigen Querschnitt aufweist. Sofern bei einem später auftretenden Defekt in einem der Heizelemente eine Reparatur der Heizeinrichtung nicht vorgesehen ist, kann der Rahmen einstückig und durch Umspritzen des Blockes hergestellt sein. Für den Fall einer späteren Demontierbarkeit ist es jedoch zweckmäßig, daß der Rahmen aus zwei Rahmenteilen besteht und die Rahmenteile lösbar miteinander verbunden, insbesondere verschraubt oder geklipst sind. Damit die wärmeleitenden Teile des Blockes in guter wärmeleitender Verbindung stehen, ist es zweckmäßig, daß an mindestens einem der Rahmenteile Mittel zum Spannen des Blockes vorgesehen sind. Diese Mittel sind vorzugsweise als gegeneinander verschiebbare Keile ausgeführt, die einstückig an dem Rahmenteil angeformt sein können oder als Einlegeteil ausgeführt sind.

Eine besonders einfache Zusammenstellung des Blockes der Heizeinrichtung ist dann möglich, wenn die Heizelemente unter Zwischenlage der Wellrippen in eines der Rahmenteile eingelegt werden können und anschließend das andere Rahmenteil montiert wird. Hierzu ist es zweckmäßig, daß die Trennungsebene der beiden Rahmenteile entlang des Umfangsrandes verläuft. Alternativ dazu kann aber auch vorgesehen werden, daß die Trennungsebene der beiden Rahmenteile jeweils im Bereich der die abgewinkelten Abschnitte umgreifenden Stirnseiten des Rahmens angeordnet ist und zwei gleiche Rahmenteile spiegelsymmetrisch zusammengefügt sind. Da somit ein standardisiertes Rahmenteil Verwendung findet, wird die Teilevielfalt und die Gefahr von Montagefehlern reduziert. Zur Erhöhung der mechanischen Festigkeit der Heizeinrichtung und als Berührungsschutz der elektrisch leitenden Teile durch nahe der Heizeinrichtung befindliche weitere Elemente einer Fahrzeugheizungs- oder Klimaanlage wird vorgeschlagen, daß innerhalb der von dem Rahmen umgebenen Fläche mindestens ein Steg vorgesehen ist, der sich zwischen zwei Seiten des Rahmens erstreckt und vorzugsweise einstückig mit einem der Rahmenteile ausgeführt ist. Dabei ist es besonders zweckmäßig, daß die Stege die Fläche gitterartig überspannen.

Die Heizelemente sind vorzugsweise so aufgebaut, daß zwischen den Blechen ein die PTC-Elemente umgebender Dichtrahmen angeordnet ist, dessen Dicke vorzugsweise geringfügig größer ist als die Dicke der PTC-Elemente. Hierfür sollte das Material des Dichtrahmens so beschaffen sein, daß es bereits bei geringem Druck auf das Maß der PTC-Elemente zusammengedrückt wird, so daß deren einwandfreie Kontaktierung an den Blechen gegeben ist. Ein solcher Dichtrahmen sorgt dafür, daß die PTC-Elemente nicht zwischen den Blechen herausfallen können und verhindert außerdem das Eindringen von Schmutz oder Feuchtigkeit, was zu einem Kurzschluß zwischen den Blechen, die an unterschiedlichen Potentialen liegen, oder auch zu Korrosion führen könnte. Damit die PTC-Elemente auch in Längsrichtung des Bleches ihre definierte Lage einhalten, besitzt der Dichtrahmen quer zu seinen Längsseiten verlaufende Arme, die zwischen benachbarten PTC-Elementen liegen. Der Dichtrahmen wird zweckmäßigerweise mittels eines Klebers mit beiden Blechen unter Einschluß der PTC-Elemente verbunden. Damit sich der Kleber lediglich an solchen Stellen befindet, an denen der Dichtrahmen mit den Blechen zur Anlage kommt und die Anlageflächen der PTC-Elemente an den Blechen mit Sicherheit frei von Klebstoff bleiben, ist es zweckmäßig, den Kleber im Siebdruckverfahren aufzutragen.

Um auch nach der Verklebung Wärmedehnungen der Heizelemente auszugleichen, sollte das Material des Dichtrahmens und des Klebers ausreichende elastische Eigenschaften besitzen. Aus diesem Grund ist es zweckmäßig, den Dichtrahmen aus Silikon zu fertigen und als Klebstoff ebenfalls ein Silikonmaterial zu verwenden. Da maßliche Abweichungen innerhalb eines bestimmten Toleranzbereichs bei der Fertigung von PTC-Elementen nicht zu vermeiden sind, ist die Breite der Öffnungen im Dichtrahmen und somit der Abstand der beiden Längsseiten größer als die Breite der PTC-Elemente. Dadurch werden Dehnungsbeanspruchungen im Material des Dichtrahmens vermieden. Damit trotzdem die PTC-Elemente auch in der Richtung zwischen den beiden Längsseiten eine definierte Lage erhalten, sind entlang der Längsseiten des Dichtrahmens nach innen gerichtete Vorsprünge angeordnet, deren Vorderkanten einem Abstand entsprechen, der gleich der Breite der PTC-Elemente ist. Der Abstand zwischen den Vorsprüngen paßt sich den jeweiligen Maßabweichungen der Breite der PTC-Elemente an.

Ausführungsbeispiele der erfindungsgemäßen Heizeinrichtung sind nachstehend anhand der Zeichnung näher erläutert. In der Zeichnung zeigt:
- Fig. 1: eine aus mehreren Heizelementen, die in einem Rahmenteil eingelegt sind, gebildete Heizeinrichtung,
- Fig. 2: einen Schnitt entlang der Linie II-II in Fig. 1, jedoch mit beiden Rahmenteilen
- Fig. 3a u. 3b: Ausführungsvarianten des Rahmenquerschnitts,
- Fig. 4: einen Schnitt entlang der Linie IV-IV durch die Anordnung gemäß Fig. 1, jedoch mit beiden Rahmenteilen,
- Fig. 5: ein einzelnes Heizelement in Explosionsdarstellung,
- Fig. 6: eine Vorderansicht aller Einzelteile der Fig. 5 und
- Fig. 7: eine Ansicht entsprechend der Pfeile VII in Fig. 5.

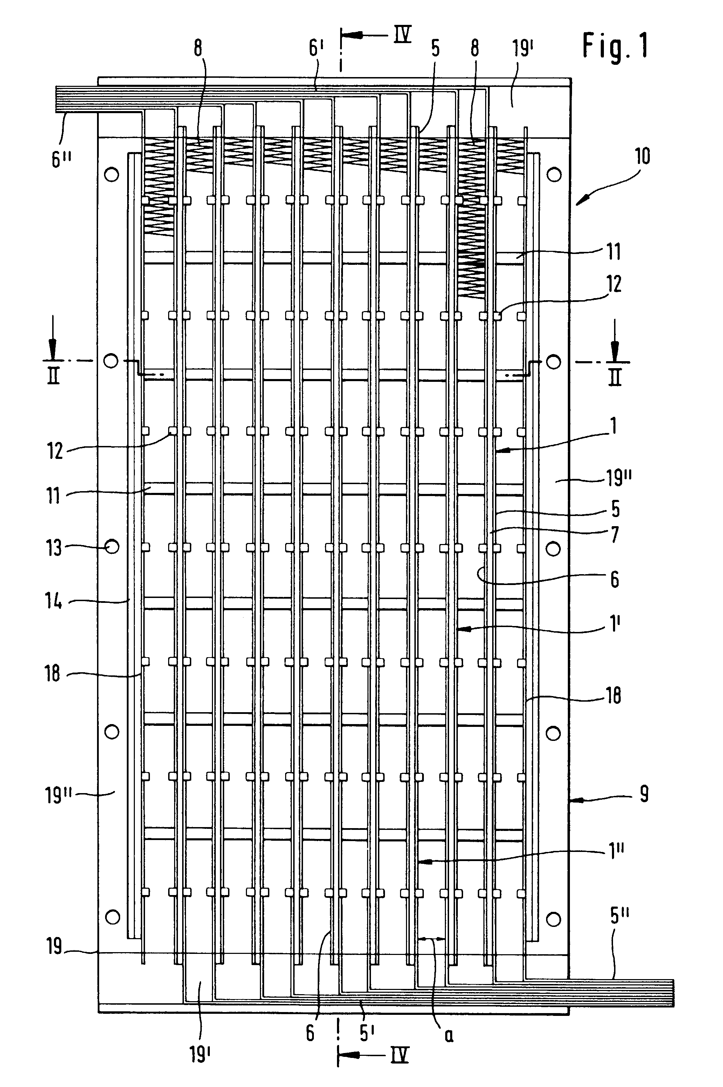

In den Fig. 1, 2 und 4 ist eine Heizeinrichtung 10 dargestellt, die mehrere in einem Rahmen 9 aufgenommene Heizelemente 1, 1', 1" und zwischen den Heizelementen angeordnete Wellrippen 8 umfaßt. Die Heizelemente 1, 1', 1" bestehen aus zwei parallel verlaufenden Blechen 5 und 6, zwischen denen sich in einem Dichtrahmen 7 mehrere PTC-Elemente 15 befinden. Die Bleche 5 und 6 jedes Heizelementes 1, 1', 1" besitzen einen rechtwinklig abgebogenen Abschnitt 5' bzw. 6', so daß die Bleche 5 bzw. 6 im wesentlichen eine L-Form aufweisen. Aufgrund der in entgegengesetzte Richtungen weisenden abgewinkelte Abschnitte 5' und 6' besitzen die Heizelemente 1, 1', 1" eine Z-Form. Die Heizelemente 1, 1', 1" sind gemäß Darstellung in Fig. 1 derart in ein Rahmenteil 19 des Rahmens 9 eingelegt, daß alle abgewinkelten Abschnitte 5' an der unteren Stirnseite 19' und alle abgewinkelten Abschnitte 6' an der oberen Stirnseite 19' liegen. Die abgewinkelten Abschnitte 5' und 6' besitzen eine ausreichende Länge, so daß sie den Abstand a zwischen zwei benachbarten Heizelementen übergreifen und sich entlang der abgewinkelten Abschnitte 5' bzw. 6' der anderen Heizelemente 1, 1', 1" erstrecken. Die Enden 5" bzw. 6" sind durch eine seitliche Öffnung der stirnseitigen Enden 19' nach außen geführt. Die Bleche 5 und 6 sind entlang der Flächen, an denen die Wellrippen 8 anliegen, mit Vorsprüngen 12 versehen, die zur Sicherung der Lage der Wellrippen 8 zwischen den Heizelementen 1, 1', 1" dienen.

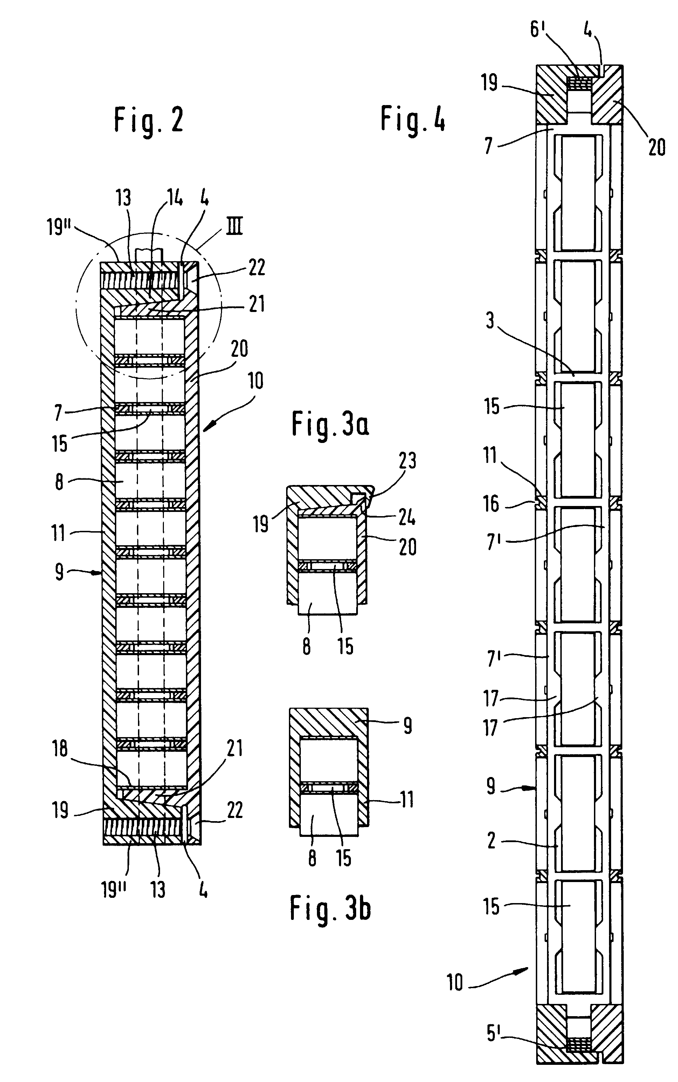

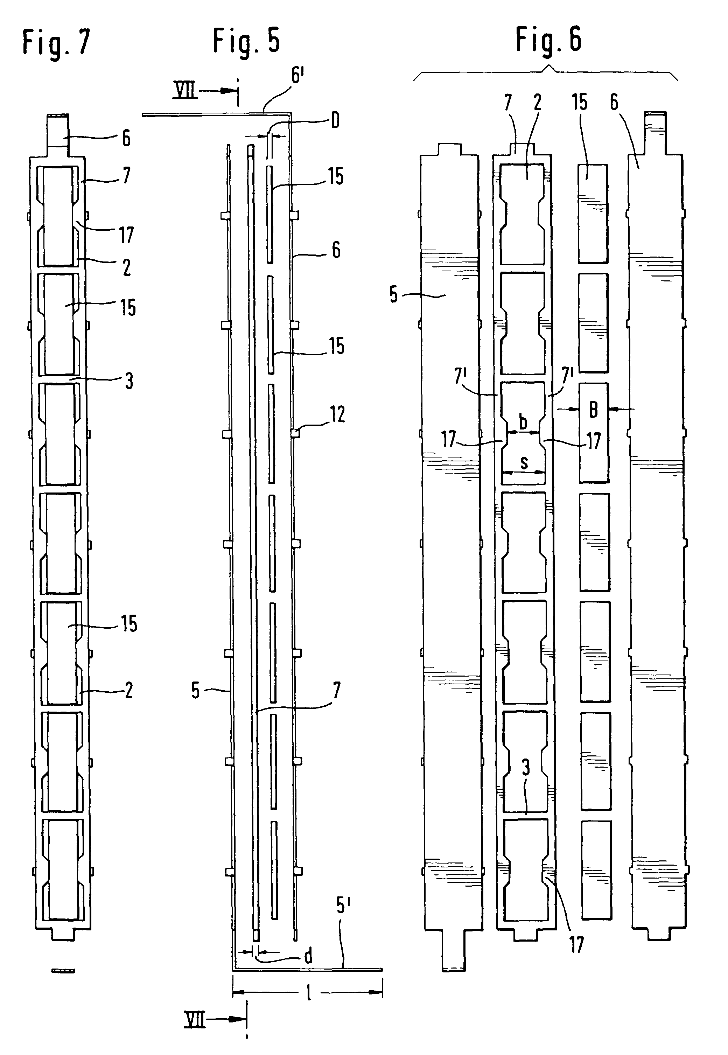

Zwischen den Längsseiten 19" der Rahmenteile 19 und 20 erstrecken sich Stege 11, die einstückig mit den Rahmenteilen ausgeführt sind. Diese Stege dienen einerseits zur Erhöhung der Festigkeit der Heizeinrichtung und bieten außerdem einen Schutz vor Berührung durch in der Nähe angeordnete metallische Bauteile. Wie aus Fig. 2 ersichtlich ist, sind in dem Rahmenteil 19 an dessen Längsseiten 19" Gewindebohrungen 13 angeordnet und das Rahmenteil 20 besitzt deckungsgleiche Senklöcher 22, so daß mittels Schrauben die beiden Rahmenteile miteinander lösbar verbunden werden. Damit die Wellrippen 8 in sicherer wärmeleitender Verbindung mit den Blechen 5 und 6 liegen, wird der Block beim Zusammenfügen der Rahmenteile 19 und 20 gespannt. Dieses Spannen geschieht mit Hilfe von Keilen 14 und 21, die jeweils an den Rahmenteilen 19 und 20 angeformt sind. Eine Trennungsebene 4 zwischen den Rahmenteilen 19 und 20 ist als Fuge zwischen diesen beiden Teilen aus den Fig. 2 und 4 ersichtlich.

Gemäß der Darstellung in Fig. 1 liegen die jeweils äußeren Wellrippen 8 an einem Abschlußblech 18, das ebenfalls als abgewinkeltes Blech ausgeführt ist. Dies hat den Vorteil, daß bei dem Zusammensetzen des Blockes für die Heizeinrichtung das Blech 18 nicht extra bezüglich seiner Längsachse ausgerichtet werden muß, sondern seine definierte Lage durch den abgewinkelten Abschnitt erhält.

Aus Fig. 4 ist außerdem ersichtlich, daß der Dichtrahmen 7 sich mit seinen Längsseiten 7' entlang des Randes des Bleches 5 erstreckt. Innerhalb des Dichtrahmens 7, der vorzugsweise aus Silikon besteht, befinden sich die PTC-Elemente 15. Zwischen zwei benachbarten PTC-Elementen 15 erstrecken sich Arme 3 des Dichtrahmens 7 zwischen den Längsseiten 7', so daß für jedes PTC-Element 15 in dem Dichtrahmen 7 eine Öffnung 2 gebildet ist. Damit aufgrund von Maßabweichungen der PTC-Elemente diese bei der Herstellung der Heizelemente problemlos in die Öffnungen 2 passen, da sonst eine Dehnungsbeanspruchung des Dichtrahmens auftritt und der elektrische Kontakt mit den Blechen nicht gewährleistet ist, ist das Maß der Öffnungen 2 größer als das der PTC-Elemente 15, wobei der Abstand zwischen den Längsseiten 7' mit s bezeichnet ist. Um trotzdem eine mittige Positionierung der PTC-Elemente 15 innerhalb jeder Öffnung 2 zwischen den Längsseiten 7' zu erreichen, besitzt der Dichtrahmen 7 an seinen Längsseiten 7' nach innen gerichtete Vorsprünge 17, die sich gegenüberliegen und einen Abstand b voneinander aufweisen, der der Breite B der PTC-Elemente 15 entspricht. Wie aus Fig. 4 außerdem ersichtlich ist, sind die Stege 11 mit Nuten 16 versehen, die zur Aufnahme von Spanndrähten dienen.

Zur Montage der in den Fig. 1, 2 und 4 beschriebenen Heizeinrichtung 10 werden die vorgefertigten Heizelemente 1, 1', 1" usw. unter Zwischenschaltung von Wellrippen 8 in das untere Rahmenteil 19 eingelegt. Den seitlichen Rand des Blockes bildet jeweils ein Abschlußblech 18. Die abgewinkelten Abschnitte 5' und 6' der Z-förmigen Heizelemente 1, 1', 1" bilden eine gemeinsame Stromzuführung, und an deren außerhalb des Rahmens 9 liegenden Enden 5" und 6" kann ein elektrisches Anschlußkabel befestigt werden. Sobald der Block vollständig in das Rahmenteil 19 eingelegt ist, wird das andere Rahmenteil 20 aufgelegt, so daß die Schrägflächen der Keile 14 und 21 gegeneinander liegen. Sodann erfolgt durch Eindrehen von Befestigungsschrauben in die Gewindebohrungen 13 ein Spannen des Blockes quer zur Längsrichtung der Heizelemente 1, 1', 1", wobei die Wellrippen 8 aufgrund ihrer Form das Maß, um das sich der gesamte Block setzt, ausgleichen und damit in sichere Anlage an den Blechen 5 und 6 gelangen.

In Fig. 3a ist dargestellt, daß zur Verbindung der Rahmenteile 19 und 20 eine Schnappverbindung vorgesehen sein kann, die durch einen federnden Bügel 23, der einen Vorsprung 24 des Rahmenteils 20 hintergreift, gebildet ist. Mehrere dieser federnden Bügel 23 sollten über den gesamten Umfang des Rahmens 9 verteilt angeordnet sein.

In der Fig. 3b ist eine alternative Ausführung gezeigt, bei der der Rahmen 9 keine entlang des Umfangsrandes verlaufende Teilungsebene besitzt und den Rand des Blockes umgreift.

Die Fig. 5 zeigt die Bestandteile eines Heizelementes der zuvor beschriebenen Figuren in Explosionsdarstellung. Wie daraus ersichtlich ist, umfaßt das Heizelement ein erstes Blech 5 mit einem abgewinkelten Abschnitt 5' und ein zweites Blech 6 mit einem abgewinkelten Abschnitt 6'. Die abgewinkelten Abschnitte 5' und 6' besitzen eine Länge 1, die wesentlich größer ist als der zuvor beschriebene Abstand a, den die Heizelemente zueinander aufweisen, wenn diese zu einem Block zusammengesetzt sind. Die Bleche 5 und 6 besitzen entlang ihrer Fläche, die zur Anlage der Wellrippen dient, Vorsprünge 12 in Form von umgebogenen Blechlappen. Die Bleche 5 und 6 schließen beim Herstellen des Heizelementes die PTC-Elemente 15 sowie den Dichtrahmen 7 zwischen sich ein. Dabei ist die Dicke d des Dichtrahmens 7 geringfügig größer als die Dicke D der PTC-Elemente 15, beispielsweise beträgt d = 1,45 mm und D = 1,4 mm.

Um die Einzelteile des Heizelementes zusammenzufügen und fest zu verbinden, werden die Flächen der Bleche 5 und 6 entsprechend der Form des Dichtrahmens 7 mit einem Klebstoff auf Silikonbasis versehen, wobei der Klebstoff vorzugsweise im Siebdruckverfahren aufgetragen wird. Damit ist sichergestellt, daß die Anlageflächen für die PTC-Elemente 15 frei von Klebstoff bleiben, so daß der elektrische und thermische Kontakt zwischen den Blechen und den PTC-Elementen gewährleistet ist. Dann wird der Dichtrahmen 7 auf eines der beiden Bleche aufgelegt, ohne den Dichtrahmen 7 anzupressen. Es erfolgt dann das Einlegen der PTC-Elemente 15 in die Öffnungen 2. Da die Öffnungen 2 zwischen den Längsseiten 7' einen größeren Abstand s besitzen als die Breite B der PTC-Elemente 15, sind zur genauen Positionierung der PTC-Elemente an den Längsseiten 7' gegenüberliegende Vorsprünge 17 vorgesehen, deren Abstand b der Breite B der PTC-Elemente entspricht. In Längsrichtung des Heizelementes gesehen, werden die PTC-Elemente 15 durch quer verlaufende Arme 3 des Dichtrahmens 7 positioniert und auf Abstand gehalten.

Sobald die PTC-Elemente 15 in die Öffnungen 2 des Dichtrahmens 7 eingelegt sind, wird das zweite Blech aufgelegt und dann erfolgt mit geeignetem Druck ein Aufeinanderpressen der Teile, so daß sich eine kraftschlüssige Verbindung der Bleche 5 und 6 über den Dichtrahmen 7 ergibt. Die Fig. 7 zeigt einen Schnitt entlang der Linie VII-VII in Fig. 5, wobei diese Darstellung der Fertigungsstufe vor Auflegen des zweiten Bleches bei der Herstellung des Heizelementes entspricht.

Es ist auch möglich, die Z-förmigen Heizelemente parallelogrammförmig in einem entsprechenden Rahmen anzuordnen, so daß ein einheitlicher Abstand des jeweiligen abgewinkelten Abschnitts 5' bzw. 6' von dem Ende des Dichtrahmens 7 gegeben ist. Damit ist die Benutzung völlig identischer Heizelemente 1 bzw. deren Bleche 5 und 6 möglich. Das gleiche Ziel wird erreicht, wenn der Winkel zwischen den Blechen 5, 6 und den Abschnitten 5', 6' etwas geringer als 90° ist, so daß die Abschnitte 5', 6 unter einem leichten Winkel in den Stirnseiten 19' des Rahmens 9 bzw. der Rahmenteile 19, 20 verlaufen.

## Patentansprüche

1. Elektrische Heizeinrichtung, insbesondere für ein Kraftfahrzeug, mit mehreren zu einem Block zusammengesetzten und in einem Rahmen (9) befestigten, parallel angeordneten Heizelementen (1, 1', 1"), die aus zwei Stromführenden Blechen (5, 6) und zwischen diesen gehaltenen PTC-Elementen (15) gebildet sind, und Wellrippen (8), die an den Blechen (5, 6) in wärmeleitender Verbindung liegen, dadurch gekennzeichnet, daß jedes Heizelement (1, 1', 1") aus solchen Blechen (5, 6) besteht, welche im wesentlichen L-förmig abgewinkelt und unter Einschluß der PTC-Elemente (15) kraftschlüssig miteinander verbunden sind, wobei die Bleche (5,6) abgewinkelte Abschnitte (5', 6') besitzen, die an entgegengesetzten Enden des Heizelementes (1, 1', 1") und in entgegengesetzter Richtung angeordnet sind und die Länge (1) der abgewinkelten Abschnitte (5', 6') der Bleche (5, 6) so bemessen ist, daß diese mit den Abschnitten der jeweils benachbarten Heizelemente (1, 1', 1") zur gegenseitigen Anlage bringbar sind.

2. Heizeinrichtung nach Anspruch 1,
dadurch gekennzeichnet, daß die Länge (l) der abgewinkelten Abschnitte (5', 6') mindestens das Zweifache eines Abstandes (a) zwischen den Heizelementen (1, 1', 1") beträgt.

3. Heizeinrichtung nach Anspruch 2,
dadurch gekennzeichnet, daß die Enden (5", 6") der abgewinkelten Abschnitte (5', 6') einer Seite jedes Heizelementes (1, 1', 1") gebündelt durch eine seitliche Öffnung des Rahmens (9) ragen, wobei vorzugsweise die gebündelten Enden (5", 6") als Steck- oder Schraubkontakt für eine Anschlußleitung ausgebildet sind.

4. Heizeinrichtung nach einem der vorhergehenden Ansprüche,
dadurch gekennzeichnet, daß die Bleche (5, 6) entlang ihrer als Anlage für die Wellrippen (8) dienenden Fläche mehrere Vorsprünge (12) aufweisen.

5. Heizeinrichtung nach einem der vorhergehenden Ansprüche,
dadurch gekennzeichnet, daß der Rahmen (9) aus einem Kunststoff besteht und die äußere Umfangsfläche des Blockes umschließt, wobei der Rahmen (9) an den Stirnseiten (19'), die die Enden der Heizelemente (1, 1', 1") aufnehmen, einen U-förmigen Querschnitt aufweisen.

6. Heizeinrichtung nach Anspruch 5,
dadurch gekennzeichnet, daß der Rahmen einstückig und durch Umspritzen des Blockes hergestellt ist.

7. Heizeinrichtung nach Anspruch 5,
dadurch gekennzeichnet, daß der Rahmen (9) aus zwei Rahmenteilen (19, 20) besteht und an mindestens einem der Rahmenteile (19, 20) Mittel zum Spannen des Blockes vorgesehen sind, wobei die Mittel zum Spannen insbesondere als gegeneinander verschiebbare Keile (14, 21) ausgeführt sind.

8. Heizeinrichtung nach Anspruch 7,
dadurch gekennzeichnet, daß eine Trennungsebene (4) der beiden Rahmenteile (19, 20) entlang des Umfangsrandes verläuft.

9. Heizeinrichtung nach Anspruch 7,
dadurch gekennzeichnet, daß die Trennungsebene der beiden Rahmenteile jeweils im Bereich der die abgewinkelten Abschnitte (5', 6') umgreifenden Stirnseiten des Rahmens vorgesehen ist und zwei gleiche Rahmenteile spiegelsymmetrisch zusammengefügt sind.

10. Heizeinrichtung nach einem der Ansprüche 7 bis 9,
dadurch gekennzeichnet, daß die Rahmenteile (19, 20) miteinander verschraubt sind, wobei vorzugsweise an parallel zur Richtung der Heizelemente (1, 1', 1") verlaufenden Seiten (19") des einen Rahmenteils (19) Gewindebohrungen (13) und in dem anderen Rahmenteil (20) deckungsgleiche Senklöcher (22) vorgesehen sind.

11. Heizeinrichtung nach einem der Ansprüche 8 oder 9,
dadurch gekennzeichnet, daß die Rahmenteile (19, 20) lösbar miteinander verbunden sind, wobei an einem Rahmenteil (19) mehrere federnde Bügel (23) angeordnet sind, die einen Vorsprung (24) oder eine Kante an dem anderen Rahmenteil (20) hintergreifen.

12. Heizeinrichtung nach einem der Ansprüche 5 bis 11,
dadurch gekennzeichnet, daß innerhalb der von dem Rahmen (9) umgebenen Fläche mindestens ein Steg (11) vorgesehen ist, der sich zwischen zwei Seiten (19") des Rahmens (9) erstreckt und vorzugsweise einstückig mit einem der Rahmenteile (19, 20) ausgeführt ist.

13. Heizeinrichtung nach einem der vorhergehenden Ansprüche,
dadurch gekennzeichnet, daß zwischen den Blechen (5, 6) ein die PTC-Elemente (15) umgebender Dichtrahmen (7) angeordnet ist, dessen Dicke (d) vorzugsweise geringfügig größer ist als die Dicke (D) der PTC-Elemente (15), wcbei vorzugsweise der Dichtrahmen (7) quer zu seinen Längsseiten (7') verlaufende Arme (3) besitzt, die zwischen benachbarten PTC-Elementen (15) liegen.

14. Heizeinrichtung nach Anspruch 13,
dadurch gekennzeichnet, daß der Dichtrahmen (7) aus Silikon besteht und mittels eines Klebers mit beiden Blechen (5, 6) verbunden ist, wobei vorzugsweise als Kleber ein im Siebdruckverfahren aufgetragenes Silikonmaterial vorgesehen ist.

15. Heizeinrichtung nach Anspruch 13,
dadurch gekennzeichnet, daß der Abstand (s) der beiden Längsseiten (7') des Dichtrahmens (7) größer ist als die Breite (B) der PTC-Elemente (15) und vorzugsweise entlang der Längsseiten (7') nach innen gerichtete Vorsprünge (17) angeordnet sind, deren Vorderkanten einem Abstand (b) entsprechen, der gleich der Breite (B) der PTC-Elemente (15) ist.

## Claims

1. An electric heating device, in particular for a motor vehicle, comprising a plurality of parallel heating elements (1, 1', 1") assembled to forma block and fastened in a frame (9), formed by two electrically conductive metal plates (5, 6) and PTC elements (15) retained between them, and corrugated ribs (8) lying in heat-conductive connection with the metal plates (5, 6), characterised in that each heating element (1, 1', 1") consists of plates (5, 6) which are angled-off essentially in a form of an L and connected to each other in a frictionally locking manner including the PTC elements (15), the plates (5, 6) having angled-off sections (5', 6') arranged at opposite ends of the heating element (1, 1', 1") and in opposite directions and the length (l) of the angled-off sections (5', 6') of the metal plates (5, 6) are so dimensioned that they can be positioned in mutual abutment with the sections of each adjacent heating element (1, 1', 1").

2. A heating device as claimed in claim 1,
characterised in that the length (l) of the angled-off sections (5', 6') is at least double a distance (a) between the heating elements (1, 1', 1").

3. A heating device as claimed in claim 2,
characterised in that the ends (5", 6") of the angled-off sections (5', 6') of one side of each heating element (1. 1', 1") project in a clustered formation through a lateral opening of the frame (9), the clustered ends (5", 6") preferably being designed so as to provide a plug-in or screw connection for a connection lead.

4. A heating device as claimed in one of the preceding claims,
characterised in that the metal plates (5, 6) have a plurality of protrusions (12) along a surface thereof which serves as an abutment for the corrugated ribs (8).

5. A heating device as claimed in one of the preceding claims,
characterised in that the frame (9) is made from a plastic and encloses the outer peripheral surface of the block, the frame (9) having a U-shaped cross-section at the end sides (19') thereof which receives the ends of the heating elements (1, 1', 1").

6. A heating device as claimed in claim 5,
characterised in that the frame is produced in one piece and by encapsulating the block.

7. A heating device as claimed in claim 5,
characterised in that the frame (9) consists of two frame parts (19, 20) and means for clamping the block are provided on at least one of the frame parts (19, 20), the clamping means being in particular designed as wedges (14, 21) which can be displaced with respect to one another.

8. A heating device as claimed in claim 7,
characterised in that a separation plane (4) of the two frame parts (19, 20) runs along the peripheral surface.

9. A heating device as claimed in claim 7,
characterised in that the separation plane of the two frame parts is provided respectively in the region of the end sides of the frame engaging around the angled-off sections (5', 6') and two identical frame parts are joined together in a mirror-symmetrical manner.

10. A heating device as claimed in one of claims 7 to 9, characterised in that the frame parts (19, 20) are screwed to one another, threaded bores (13) being provided preferably on sides (19") running parallel with the direction of the heating elements (1, 1', 1") of one frame part (19) and coinciding countersinking holes (22) being provided on the other frame part (20).

11. A heating device as claimed in one of claims 8 or 9, characterised in that the frame parts (19, 20) are releasably connected to one another, a plurality of resilient clips (23) being arranged on one frame part (19) which engage behind a protrusion (24) or an edge on the other frame part (20).

12. A heating device as claimed in one of claims 5 to 11,
characterised in that at least one web (11) is provided within the surface area enclosed by the frame (9) extending between two sides (19") of the frame (9) and preferably configured integrally with one of the frame parts (19, 20).

13. A heating device as claimed in one of the preceding claims,
characterised in that a sealing frame (7) enclosing the PTC elements (15) is provided between the metal plates (5, 6), the thickness (d) of which is preferably slightly greater than the thickness (D) of the PTC elements (15), the sealing frame (7) preferably having arms (3) running transversely with respect to its longitudinal sides (7') and lying between adjacent PTC elements (15).

14. A heating device as claimed in claim 13,
characterised in that the sealing frame (7) is made from silicone and is connected to the two metal plates (5, 6) by means of an adhesive, the adhesive preferably being provided as a silicone material applied by a screen printing process.

15. A heating device as claimed in claim 13,
characterised in that the distance (s) between the two longitudinal sides (7') of the sealing frame (7) is greater than the width (B) of the PTC elements (15), inwardly directed protrusions (17) preferably being arranged along the longitudinal sides (7'), the front edges of which correspond to a distance (b) which is equal to the width (B) of the PTC elements (15).

## Revendications

1. Dispositif de chauffage électrique, notamment pour un véhicule automobile, comportant plusieurs éléments chauffants (1, 1', 1") disposés parallèlement, regroupés en un bloc et fixés dans un cadre (9), qui sont formés de deux tôles (5, 6) conduisant le courant, et, maintenus entre celles-ci, d'éléments PTC, et des ailettes ondulées (8) s'appuyant sur les tôles (5, 6) par une liaison conduisant la chaleur, caractérisé en ce que chaque élément chauffant (1, 1', 1") est constitué de tôles (5, 6) d'un type correspondant à des tôles sensiblement coudées en forme de L et reliées par une liaison par adhérence, en enserrant les éléments PTC (15), les tôles (5, 6) possédant des tronçons coudés (5', 6') qui sont agencés à des extrémités opposées de l'élément chauffant (1, 1', 1") et selon des directions opposées, et la longueur (I) des tronçons coudés (5', 6') des tôles (5, 6) étant dimensionnée de façon à ce que ceux-ci puissent être amenés en appui réciproque avec les tronçons des éléments chauffants (1, 1', 1") respectivement voisins.

2. Dispositif de chauffage selon la revendication 1, caractérisé en ce que la longueur (I) des tronçons coudés (5', 6') est au moins égale au double de la distance (a) entre les éléments chauffants (1, 1', 1").

3. Dispositif de chauffage selon la revendication 2, caractérisé en ce que les extrémités (5", 6") des tronçons coudés (5', 6') d'un côté de chaque élément chauffant (1, 1', 1") sortent, en étant regroupées en faisceau, à travers une ouverture latérale du cadre (9) dont elles font saillie, les extrémités (5", 6") regroupées en faisceau étant de préférence réalisées en tant que contact à fiche ou contact à vis pour un conducteur de raccordement.

4. Dispositif de chauffage selon l'une des revendications précédentes, caractérisé en ce que les tôles (5, 6) présentent, le long de leurs surfaces servant d'appui aux ailettes ondulées (8), plusieurs protubérances (12).

5. Dispositif de chauffage selon l'une des revendications précédentes, caractérisé en ce que le cadre (9) est réalisé en une matière plastique et entoure la surface périphérique extérieure du bloc, le cadre (9) présentant, au niveau des côtés frontaux (19') recevant les éléments chauffants (1, 1', 1"), une section transversale en forme de U.

6. Dispositif de chauffage selon la revendication 5, caractérisé en ce que le cadre est réalisé d'un seul tenant et est fabriqué en étant moulé par injection autour du bloc.

7. Dispositif de chauffage selon la revendication 5, caractérisé en ce que le cadre (9) est constitué de deux parties de cadre (19, 20), et en ce que sur au moins l'une des parties de cadre (19, 20) sont prévus des moyens de serrage du bloc, les moyens de serrage étant notamment réalisés en tant que coins (14, 21) pouvant coulisser l'un à l'encontre de l'autre.

8. Dispositif de chauffage selon la revendication 7, caractérisé en ce qu'un plan de joint (4) des deux parties de cadre (19, 20) s'étend le long du bord périphérique.

9. Dispositif de chauffage selon la revendication 7, caractérisé en ce que le plan de joint des deux parties de cadre est prévu pour chacune des parties, dans la zone des côtés frontaux du cadre entourant les tronçons coudés (5', 6'), et deux parties de cadre identiques sont réunies de manière symétrique inverse.

10. Dispositif de chauffage selon l'une des revendications 7 à 9, caractérisé en ce que les parties de cadre (19, 20) sont vissées l'une à l'autre, des trous taraudés (13) étant de préférence prévus sur des côtés (19") d'une partie de cadre (19), qui s'étendent parallèlement à la direction des éléments chauffants (1, 1', 1"), et des trous d'encastrement (22) étant prévus en correspondance dans l'autre partie de cadre (20).

11. Dispositif de chauffage selon l'une des revendications 8 ou 9, caractérisé en ce que les parties de cadre (19, 20) sont reliées de manière démontable, plusieurs étriers élastiques (23) étant disposés sur une partie de cadre (19), et venant s'engager sous une protubérance (24) ou un bord de l'autre partie de cadre (20).

12. Dispositif de chauffage selon l'une des revendications 5 à 11, caractérisé en ce qu'à l'intérieur de la surface entourée par le cadre (9) est prévue au moins une nervure (11), qui s'étend entre deux côtés (19") du cadre (9) et est de préférence réalisée d'un seul tenant avec l'une des parties de cadre (19, 20).

13. Dispositif de chauffage selon l'une des revendications précédentes, caractérisé en ce qu'entre les tôles (5, 6) est disposé un cadre d'étanchéité (7) entourant les éléments PTC (15) et dont l'épaisseur (d) est de préférence légèrement supérieure à l'épaisseur (D) des éléments PTC (15), le cadre d'étanchéité (7) possédant de préférence des bras (3) qui s'étendent transversalement à ses côtés longitudinaux (7') et se situent entre des éléments PTC (15) voisins.

14. Dispositif de chauffage selon la revendication 13, caractérisé en ce que le cadre d'étanchéité (7) est réalisé en silicone et est relié aux deux tôles (5, 6) au moyen d'une colle, la colle prévue étant de préférence un matériau silicone appliqué selon un procédé de sérigraphie.

15. Dispositif de chauffage selon la revendication 13, caractérisé en ce que la distance (s) entre les deux côtés longitudinaux (7') du cadre d'étanchéité (7) est supérieure à la largeur (B) des éléments PTC (15), et en ce que de préférence le long des côtés longitudinaux (7') sont agencées des protubérances (17) dirigées vers l'intérieur, dont les bords avant sont espacés d'une distance (b) correspondant à la largeur (B) des éléments PTC (15).
